# EUROPEAN PATENT APPLICATION

(11) **EP 3 477 913 A1**
(43) Date of publication of application: **01.05.2019**
(21) Application number: 17198825.6
(22) Date of filing: 27.10.2017
(51) Int. Cl.: H04L 29/08

(54) **AN ELEVATOR SYSTEM HAVING A MULTICHANNEL MOBILE COMMUNICATION FUNCTIONALITY AND A METHOD FOR PROVIDING A MULTICHANNEL MOBILE COMMUNICATION FUNCTIONALITY FOR AN ELEVATOR SYSTEM**

(71) Applicant: KONE Corporation, 00330 Helsinki (FI)
(72) Inventor: HÄNNINEN, Ari, 00330 Helsinki (FI); RATIA, Jouni, 00330 Helsinki (FI); PURANEN, Mikko, 00330 Helsinki (FI); HUOTARI, Tommi, 00330 Helsinki (FI); HAUTAKORPI, Jani, 00330 Helsinki (FI); SALMIKUUKKA, Jukka, 00330 Helsinki (FI)
(74) Representative: Berggren Oy, Helsinki & Oulu

(57) **Abstract**

The invention relates to an elevator system having a multichannel mobile communication functionality. The elevator system comprises: an elevator shaft, and a mobile communication base station arranged the elevator shaft to a close vicinity of top of a building. The base station is at least configured to receive and transmit signals with an external mobile communication system and to receive and transmit the signals inside the elevator shaft. The signals comprise multiple channels and at least one of the multiple channels is configured to provide a first high-speed functionality for the at least one elevator related unit of the elevator system. The invention relates also to a method for providing a multichannel mobile communication functionality for an elevator system.

## Description

### TECHNICAL FIELD

The invention concerns in general the technical field of elevators. Especially the invention concerns mobile communication network for an elevator system.

### BACKGROUND

Nowadays wireless communication becomes more and more common in elevators, e.g. an emergency telephone or other devices use wireless technology, such as second generation (2G), third generation (3G), or fourth generation (4G) mobile telecommunication technology.

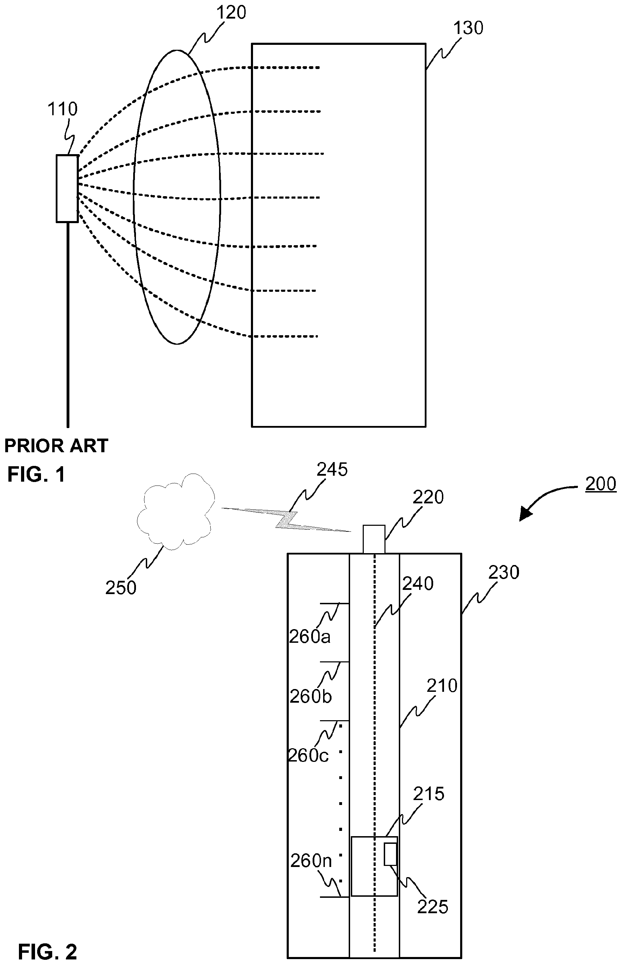

When going towards high speed fifth generation (5G) mobile telecommunication technology, signals have higher frequency, even up to 30 GHz, and therefore shorter range. At the same time buildings are coming more eco-efficient, which means that walls and windows will block wireless network signals to reach floors of the buildings and especially elevator shafts. Because, the elevator shafts are usually a backbone of the building made, e.g. from concrete and steel, it is difficult for wireless network signal to get into the elevator shaft, where a mobile terminal, such as a mobile phone or an elevator emergency telephone (KRM), may usually locate. Thus, modern buildings with metallized windows and effective thermal insulation with aluminized surfaces may prevent the usage of the wireless network or at least weaken the network significantly. Figure 1 illustrates one prior art solution, wherein an external base station 110 is used to provide 5G signals 120 inside a building 130. Typically, the 5G signals 120 propagate only to a part of the building 130, not throughout the building, as shown in Figure 1. Furthermore, tall buildings would require several external base stations 110 in vertical direction.

The 5G mobile telecommunication technology enables significantly higher data rates, such as 100 times higher, and wider bandwidths than the 4G mobile communication technology. Thus, the 5G mobile telecommunication technology enables that a huge amount of data may be transferred. Moreover, the delay in 5G mobile telecommunication technology may be even less than 1 ms, which enables basically a real-time communication. Furthermore, the 5G mobile telecommunication technology enables several levels of communication systems for different mobile communication applications. For example, some applications may require very fast data rates and some other applications may in turn require a stable connection. Some examples of these levels may be open public network for mobile phones, licensed channels for limited use, and slow longer range for Internet of things (loT), for example.

Moreover, according to elevator regulations it is not allowed to install into the elevator shaft any units, such as repeaters for providing wireless network, that are not related to elevators.

### SUMMARY

An objective of the invention is to present an elevator system having a multichannel mobile communication functionality and a method for providing a multichannel mobile communication functionality for an elevator system. Another objective of the invention is that the elevator system having a multichannel mobile communication functionality and method for providing a multichannel mobile communication functionality for an elevator system improve the use of the mobile communication network.

The objectives of the invention are reached by an elevator system and a method as defined by the respective independent claims.

According to a first aspect, an elevator system having a multichannel mobile communication functionality is provided, wherein the elevator system comprises: an elevator shaft, and a mobile communication base station arranged the elevator shaft to a close vicinity of top of a building, the base station is at least configured to receive and transmit signals with an external mobile communication system and to receive and transmit the signals inside the elevator shaft, wherein the signals comprise multiple channels and at least one of the multiple channels is configured to provide a first high-speed functionality for the at least one elevator related unit of the elevator system.

The other channels of the multiple channels may be configured to provide at least one of the following: a slow speed functionality for one or more non-time critical units or devices, a second high-speed functionality for non-elevator related local systems, a public communication functionality for public mobile terminals.

The signals may be 5G or pre-5G signals.

The elevator related unit of the elevator system may be a safety critical unit, which may be at least one of the following: wireless safety circuit, elevator emergency telephone, wireless intercom system, surveillance camera.

The base station may comprise at least one of the following: a passive repeater antenna, an active repeater antenna.

The elevator system may further comprise at least one secondary base station arranged to one or more landings of the elevator shaft and configured to receive and transmit the signals further inside the building.

The elevator system may further comprise at least one other elevator shaft, which does not extend to the top of the building and at least one other secondary base station arranged to the at least one other elevator shaft or to at least one landing of the at least one other elevator shaft, wherein the at least one other secondary base station may be configured to receive and transmit the signals inside the at least one other elevator shaft.

The elevator system may further comprise at least one automatic door and/or at least one escalator and at least one other secondary base station arranged to the at least one automatic door and/or to the at least one escalator, wherein the at least one other secondary base station may be configured to receive and transmit the signals further inside the building.

The at least one secondary base station may comprise at least one of the following: a passive repeater antenna, an active repeater antenna.

The external mobile communication system may be at least one of the following: public network, telecommunication company system, cloud system.

According to a second aspect, a method for providing a multichannel mobile communication functionality for an elevator system is provided, wherein the method comprises: receiving and transmitting signals with an external mobile communication system by means of a mobile communication base station arranged the elevator shaft to a close vicinity of top of a building, and receiving and transmitting the signals inside the elevator shaft by means of the base station, wherein the signals comprise multiple channels and at least one of the multiple channels provides a first high-speed functionality for at least one elevator related unit of the elevator system.

The other channels of the multiple channels may provide at least one of the following: a slow speed functionality for one or more non-time critical units or devices, a second high-speed functionality for non-elevator related local systems, a public communication functionality for public mobile terminals.

The signals may be 5G or pre-5G signals.

The elevator related unit of the elevator system may be a safety critical unit, which may be at least one of the following: wireless safety circuit, elevator emergency telephone, wireless intercom system, surveillance camera.

The method may further comprise receive and transmit the signals further inside the building by means of at least one secondary base station arranged to one or more landings of the elevator shaft.

The method may further comprise receiving and transmitting signals inside at least one other elevator shaft which does not extend to the top of the building by means of at least one other secondary base station arranged to the at least one other elevator shaft or to at least one landing of the at least one other elevator shaft.

The method may further comprise receiving and transmitting the signals further inside the building by means of the at least one other secondary base station arranged to the at least one automatic door and/or to the at least one escalator.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 illustrates schematically a prior art solution.
Figure 2 illustrates schematically an example of an elevator system according to the invention.
Figure 3 illustrates schematically another example of an elevator system according to the invention.
Figure 4 illustrates schematically another example of an elevator system according to the invention.
Figure 5 illustrates schematically another example of an elevator system according to the invention.
Figure 6 illustrates schematically an example of a method according to the invention.
Figure 7 illustrates schematically an example of a base station according to the invention.
Figure 8 illustrates schematically an example of a secondary base station according to the invention.

### DESCRIPTION OF SOME EMBODIMENTS

Figure 2 illustrates schematically an example of an elevator system 200, wherein the embodiments of the invention may be implemented as will be described. The elevator system 200 according to the invention comprises an elevator shaft 210 and a mobile communication base station 220. The elevator system 200 further comprises a hoisting machine configured to drive an elevator car 215 in the elevator shaft 210 between the landings. For sake of clarity the hoisting machine and elevator car suspension means such as ropes or belts, are not shown in Figure 2. The elevator system 200 according to the invention enables providing a mobile communication network 240 inside the elevator shaft 210, which is a natural vertical channel in a building 230. Preferably, the mobile communication network provided by the elevator system 200 according to the invention may be a fifth generation (5G) or pre-5G mobile communication network 240, because 5G signals 240 forming the 5G network have higher frequency (even up to 30 GHz) and therefore shorter coverage range, i.e. the 5G signals 240 attenuate strongly and do not enter far inside the building. Thus, the elevator system 200 according to the invention comprises the base station 220 configured to receive and transmit the 5G signals inside the elevator shaft 210 and a building 230. The terms mobile communication networks or signals are used in this application to mean a next-generation of mobile communication networks or signals beyond fourth generation (4G) mobile communication networks or signals, such as 5G, pre-5G or similar networks or signals. The 5G or pre-5G network enables at least the following advantages in comparison to 4G networks: high data rates (such as even 100 times higher than in the 4G networks), wide bandwidths, high capacity, short delay (even less than 1 ms), reliable communication, etc.. These enable that the 5G network may be used to serve several mobile communication applications and/or users at the same time and a huge amount of data may be transferred.

The base station 220 is configured to receive and transmit signals 245 with one or more external mobile communication systems 250. The external mobile communication system 250 may be for example at least one of the following: public network, telecommunication company system, cloud system, etc.. The base station 220 is further configured to receive and transmit the signals 240 inside the elevator shaft 210 and thus enabling that the signal level is good even in the shaft pit. In Figures of this application the mobile communication signals 240 forming the mobile communication network are illustrated with individual dashed lines because of simplicity, but the network covers wider area, such as the whole elevator shaft 210 in Figure 2. The base station 220 is arranged to the elevator shaft 210 to a close vicinity of top of a building 230 in order to have as good signal strength as possible at the base station 220.

The elevator system 200 according to the invention may further comprise at least one elevator related unit 225 with which the base station 220 may be configured to receive and transmit the signals. The at least one elevator related unit 225 may be any elevator related unit, component, or system relating to the elevator system 200. Alternatively or in addition, the elevator related unit 225 may be a safety critical unit, which may be for example at least one of the following: elevator emergency telephone (KRM), wireless safety circuit, wireless intercom system, surveillance camera. According to elevator regulations it is not allowed to install into the elevator shaft 210 any units or systems, such as base stations for providing wireless network, that are not related to elevators. However, if one or more units, components, or systems of the elevator system, e.g. the elevator emergency telephone or safety circuit, are using the mobile communication network 240 provided by the base station 220, it is allowed to use of the mobile communication network 240 also by other units or users that are not related to the elevator system, such as any mobile terminal residing in the elevator car 215 in the elevator shaft 210. Thus, the base station 220 may be further configured to receive and transmit signals with the at least one mobile terminal residing in the elevator car 215 in the elevator shaft 210. The mobile terminal may be for example a mobile phone, a tablet computer, elevator related unit 225, or any device/system/unit capable to use the mobile communication network provided by the system according to the invention.

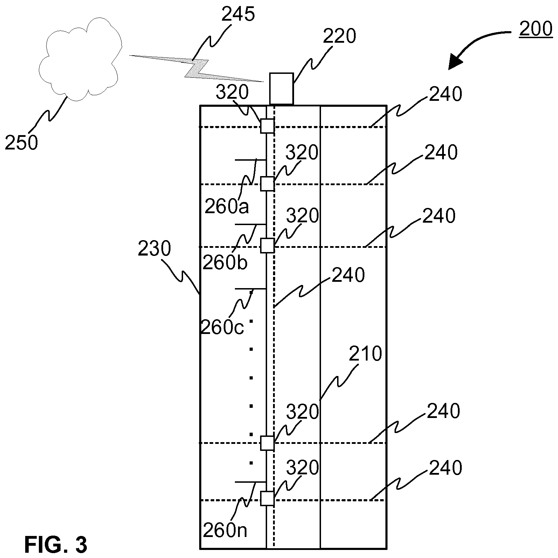

According to one exemplifying embodiment of the invention, the elevator system 200 may further comprise at least one secondary base station 320 arranged to one or more landings 260a-260n of the elevator shaft 210. The secondary base stations 320 may be configured to receive and transmit signals 240 with the base station 220 and thus configured to receive and transmit the signals 240 further inside the building 230. This is illustrated in Figure 3. The at least one secondary base station 320 may be arranged to a landing door of the landing 260a-260n, for example. Arranging the at least one secondary base station 320 to each landing 260a-260n of the elevator shaft 210 enables that one or more mobile terminals residing almost anywhere inside the building 230 may use the mobile network provided by the base station 220 and/or the at least one secondary base station 320. Thus, the base station 220 may be further configured to receive and transmit signals with the at least one mobile terminal residing inside the building 230 via the at least one secondary base station 320. The mobile terminal may be for example a mobile phone, a tablet computer, elevator related unit 225, or any device/system/unit capable to use the mobile communication network provided by the system according to the invention.

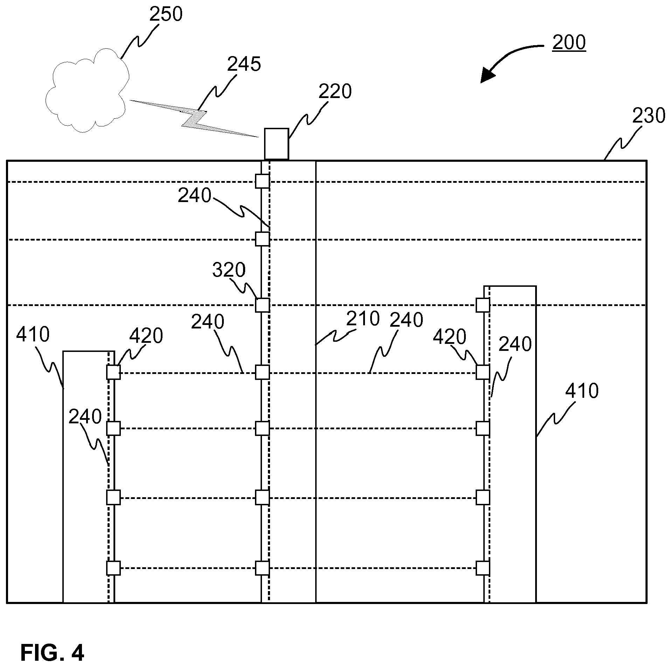

Furthermore, according to one exemplifying embodiment of the invention, the elevator system 200 may further comprise at least one other elevator shaft 410, which does not extend to the top of the building 230. Figure 4 illustrates schematically an example of elevator system 200 comprising one elevator shaft 210 extending to the top of the building 230 and at least one other elevator shaft 410, which does not extend to the top of the building 230. For clarity reasons, the landings of the elevator shafts are not shown in Figure 4. The base station 220 is arranged to the elevator shaft 210 to a close vicinity of top of a building 230 and at least one secondary base station 320 may be arranged to one or more landings 260a-260n of the elevator shaft 210 as described above. The elevator system 200 may comprise further at least one other secondary base station 420 arranged to the at least one other elevator shaft 410 or to at least one landing of the at least one other elevator shaft 410 as illustrated in the example shown in Figure 4, wherein the system comprises one secondary base station 320, 420 arranged to each landing of each elevator shafts 210, 410.

The at least one other secondary base station 420 arranged to the at least one other elevator shaft 410 may be configured to receive and transmit signals 240 with the base station 220 via at least one secondary base station 320 arranged to the elevator shaft 210 and thus configured to receive and transmit the signals 240 inside at least one other elevator shaft 410 and/or further inside the building 230. Arranging the at least one other secondary base station 420 to the at least one other elevator shaft 410 enables that one or more mobile terminals residing inside the at least one other elevator shaft 410 may use the mobile network 240 provided by the base station 220 via at least one secondary base station 320, 420. Thus, the base station 220 may be further configured to receive and transmit signals with the at least one mobile terminal residing in the elevator car in the at least one other elevator shaft 410. Alternatively or in addition, arranging the at least one other secondary base station 420 to each landing of the at least one other elevator shaft 410 enables that one or more mobile terminals residing almost anywhere inside the building 230 may use the mobile network 240 provided by the base station 220 via at least one secondary base station 320, 420. Thus, the base station 220 may be further configured to receive and transmit signals with the at least one mobile terminal residing inside the building 230 via the at least one secondary base station 320, 420. The mobile terminal may be for example a mobile phone, a tablet computer, elevator related unit, or any device/system/unit capable to use the mobile communication network provided by the system according to the invention.

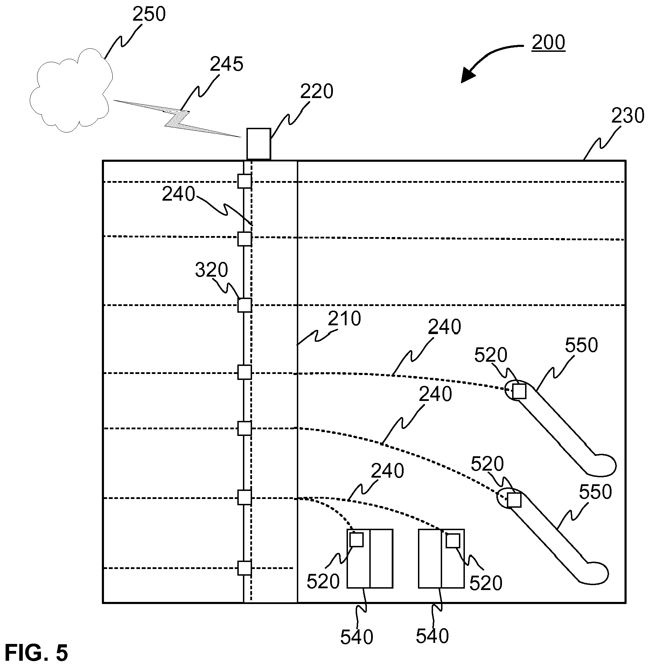

Alternatively or in addition, according to one exemplifying embodiment of the invention, the elevator system 200 may further comprise at least one automatic door and/or at least one escalator. Figure 5 illustrates schematically an example of elevator system 200 comprising one elevator shaft 210 extending to the top of the building 230 and at least one automatic door 540 and/or at least one escalator 550. For clarity reasons, the landings of the elevator shaft 210 are not shown in Figure 5. The elevator system 200 may further comprise also at least one other elevator shaft 410 as described above. The base station 220 is arranged to the elevator shaft 210 to a close vicinity of top of a building 230 and at least one secondary base station 320 may be arranged to one or more landings 260a-260n of the elevator shaft 210 as described above. The elevator system 200 may comprise further at least one other secondary base station 520 arranged to the at least one automatic door 540a and/or to the at least one escalator 550 as illustrated in the example shown in Figure 5. The example system illustrated in Figure 5 comprises one secondary base station 320, 520 arranged to each landing of the elevator shaft 210, to each automatic door 540, and to each escalator 550.

The at least one other secondary base station 520 arranged to the at least one automatic door 540 and/or to the at least one escalator 550 may be configured to receive and transmit signals 240 with the base station 220 via at least one secondary base station 320 and thus configured to receive and transmit the signals 240 further inside the building. Alternatively or in addition, the at least one another secondary base station 520 arranged to the at least one automatic door 540a and/or to the at least one escalator 550 may be configured to transmit the signals to the base station 220 via at least one secondary base station 320, which may then transmit the signals to the external mobile communication system 250. Alternatively or in addition, the base station 220 may transmit signals received from the external communication system 250 to the at least one another secondary base station 520 arranged to the at least one automatic door 540 and/or to the at least one escalator 550 via at least one secondary base station 320.

Arranging the at least one another secondary base station 520 to the at least one automatic door 540 and/or to the at least one escalator 550 enables that one or more mobile terminals residing almost anywhere inside the building 230 may use the mobile network 240 provided by the base station 220 via at least one secondary base station 320, 520. Thus, the base station 220 may be further configured to receive and transmit signals with the at least one mobile terminal residing inside the building 230 via the at least one secondary base station 320, 420, 520. The mobile terminal may be for example a mobile phone, a tablet computer, elevator related unit, or any device/system/unit capable to use the mobile communication signals provided by the system according to the invention.

The 5G mobile communication technology enables that the signals comprise multiple channels for providing multiple functionalities for different applications and users. Thus, the above described elevator system 200 according to the invention enables that the signals, such as 5G or pre-5G signals, transmitted and received by the base station 220 may comprise multiple channels for providing multiple functionalities for different applications and users residing inside the elevator shaft 210. In addition, if the elevator system 200 according to the invention comprises at least one secondary base station 320, 420, 520 the signals, i.e. 5G or pre-5G signals, comprise multiple channels for providing multiple functionalities for different applications and users residing inside the elevator shaft 210, 410 and inside the building 230.

At least one of the multiple channels is configured to provide a first high-speed functionality for at least one elevator related unit 225 of the elevator system 200. The at least one elevator related unit 225 of the elevator system 200 may be for example any elevator related unit, such as a safety critical unit as described above. Because the delay in 5G network may be even less than 1 ms, it enables almost a real-time communication. This, in turn, enables that the safety circuit of the elevator system may be implemented as a wireless solution instead of the traditional relay-based solution. In addition, the channel providing the first high speed functionality may be protected against any cyber-security-attack in order to enhance the safety of the elevator system.

Furthermore, at least one other channel of the multiple channels of the signals may be configured to provide a slow speed functionality for one or more non-time critical units or devices residing inside the building 230. The slow speed functionality may be used for example for Internet of Things (loT), self-diagnostics of components, etc..

Alternatively or in addition, at least one other channel of the multiple channels of the signals may be configured to provide a second high-speed functionality for non-elevator related local systems residing inside the building 230. The second high-speed functionality may be used for example for an internal building level communication. The second high-speed functionality enables providing local mobile networks for one or more building level users, such as companies operating in the building 230. Some examples of the building level users may be for example building automation system provider, access control system provider, etc.. Alternatively or in addition, the second high-speed functionality enables operation of local mini/micro operators. Furthermore, the channel providing the second high-speed functionality may be protected against any cyber-security-attack. Alternatively or in addition, the second high-speed functionality may comprise providing elevator related data obtained from one or more elevator related units, components, or systems for example to an external cloud server or similar.

Alternatively or in addition, at least one other channel of the multiple channels of the signals may be configured to provide public communication functionality for public mobile terminals. The mobile terminal may be for example a mobile phone, a tablet computer, or any device/system/unit capable to use the mobile communication network provided by the system according to the invention. Alternatively or in addition, public communication functionality may comprise obtaining identification information of a user or a product entering and/or leaving the elevator car. Furthermore, also location information of the user or the product may be obtained. The obtained information is confidential and may be used for example for material deliveries, for people flow analysis, or for rescue operation in case of emergency. Moreover, the obtained information may be used for basis of charging, if the elevator maintenance fees etc. are based on pay-per-use.

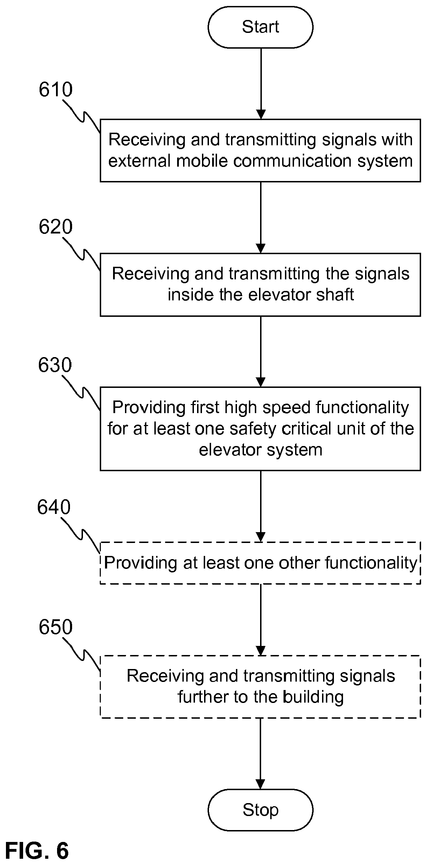

Next an example of a method according to the invention is described by referring to Figure 6. Figure 6 schematically illustrates the invention as a flow chart. As already discussed the base station receives and transmits 610 signals with the external mobile communication system and further receives and transmits 620 the signals inside the elevator shaft. Thus, the base station may receive and transmit signals with at least one elevator related unit of the elevator system and/or at least one mobile terminal residing in the elevator car in the elevator shaft. The signals comprise multiple channels for providing multiple functionalities for different applications and users. At least one of the multiple channels provides 630 a first high-speed functionality for the at least one elevator related unit of the elevator system as described. Furthermore, at least one other channel of the multiple channels may provide 640 at least one other functionality. The other functionalities may be at least one of the following: slow speed functionality for one or more non-time critical units or devices, a second high speed functionality for non-elevator related local systems, a public communication functionality for public mobile terminals. Alternatively or in addition, as already discussed at least one secondary base station arranged to one or more landings of the elevator shaft may receive and transmit 650 the signals further inside the building. Thus, the base station may receive and transmit signals with the at least one mobile terminal residing inside the building via the at least one secondary base station.

Alternatively or in addition, as already discussed at least one other secondary base station arranged to one or more landings of at least one other elevator shaft may receive and transmit signals inside the at least one other elevator shaft and/or further inside the building. Thus, the base station may receive and transmit signals with at least one mobile terminal residing in the elevator car in the at least one other elevator shaft and/or further inside the building. Alternatively or in addition, as already discussed at least one other secondary base station arranged to at least one automatic door and/or to the at least one escalator may receive and transmit signals further inside the building. Thus, the base station may receive and transmit signals with at least one mobile terminal residing inside the building via the at least one other secondary base station. The signals may preferably be 5G or pre-5G signals as described above.

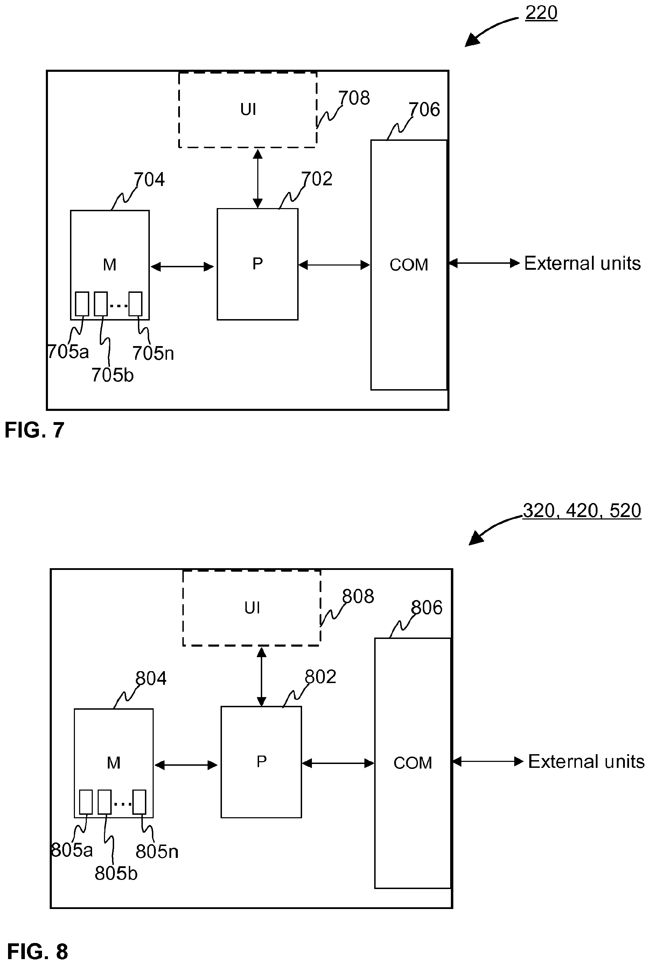

Figure 7 illustrates schematically an example of the base station 220 according to the invention. The base station 220 comprises at least one processor 702 and at least one memory 704 for storing at least one portion of computer program code 705a-705n and any data values. Furthermore, the base station 220 may comprise a communication interface 506 in order to provide interface for communication with any external unit, such as the external mobile communication system 250, at least one secondary base station 320, 420, 502, at least one elevator related unit 225 of the elevator system, any mobile terminal, database and/or any other external systems in order to exchange pieces of information as described. The communication interface 706 may be based on one or more known communication technologies, either wired or wireless, in order to exchange pieces of information as described earlier. The communication interface 706 of the base station 220 may comprise at least one of the following: a passive repeater antenna, an active repeater antenna, in order to communicate with the at least one secondary base station 320, 420, 520 at least one elevator related unit 225 of the elevator system, and/or any mobile terminals as described. Furthermore, the base station 220 may comprise a user interface 708. The mentioned elements may be communicatively coupled to each other with e.g. an internal bus.

For sake of clarity, the processor herein refers to any unit suitable for processing information and control the operation of the base station 220, among other tasks. The operations may also be implemented with a microcontroller solution with embedded software. Similarly, the memory 704 is not limited to a certain type of memory only, but any memory type suitable for storing the described pieces of information may be applied in the context of the present invention.

The processor 702 of the base station 220 is at least configured to implement at least some operations of the base station 220 as described. The implementation of the operations of the base station 220 may be achieved by arranging the processor 702 to execute at least some portion of computer program code 705a-705n stored in the memory 704 causing the processor 702, and thus the base station 220, to implement one or more operations of the base station 220. The processor 702 is thus arranged to access the memory 704 and retrieve and store any information therefrom and thereto. Moreover, the processor 702 is configured to control the communication through the communication interface 706 with any external unit, such as with the external mobile communication system 250, the at least one secondary base station 320, 420, 520 the at least one elevator related unit 225 of the elevator system, and/or any mobile terminal. The base station 220 may be any base station, such as a repeater for example, suitable for receiving and transmitting 5G, pre-5G or similar signals.

Furthermore, according to one embodiment of the elevator system 200 according to the invention, the base station 220 may comprise an internal power source to provide operating power for the base station 220. The internal power source may be for example one of the following: battery, capacitive solution, regenerative solution. Alternatively or in addition, the operating power may be provided to the base station 220 from a solar cell arranged to the top of the building 230, such as to a roof of the building 230. Alternatively or in addition, the operating power may be provided to the base station 220 from an electric system of the building 230 or from a machine room of the elevator system 200, for example from power supply cables of the elevator system 200.

Figure 8 illustrates schematically an example of the secondary base station 320, 420, 520 according to the invention. The secondary base station 320,420, 520 comprises at least one processor 802 and at least one memory 604 for storing at least one portion of computer program code 805a-805n and any data values. Furthermore, the secondary base station 320, 420, 520 may comprise a communication interface 806 in order to provide interface for communication with any external unit, such as the base station 220, the at least one elevator related unit 225 of the elevator system, any mobile terminal, database and/or any other external systems in order to exchange pieces of information as described. The communication interface 806 may be based on one or more known communication technologies, either wired or wireless, in order to exchange pieces of information as described earlier. The communication interface 806 of the base station 320, 420, 520 may comprise at least one of the following: a passive repeater antenna, an active repeater antenna, in order to communicate with the base station 220, the at least one elevator related unit 225 of the elevator system, and/or any mobile terminals as described. Furthermore, the secondary base station 320, 420, 520 may comprise a user interface 808. The mentioned elements may be communicatively coupled to each other with e.g. an internal bus.

For sake of clarity, the processor herein refers to any unit suitable for processing information and control the operation of the secondary base station 320, 420, 520, among other tasks. The operations may also be implemented with a microcontroller solution with embedded software. Similarly, the memory 604 is not limited to a certain type of memory only, but any memory type suitable for storing the described pieces of information may be applied in the context of the present invention.

The processor 802 of the secondary base station 320, 420, 520 is at least configured to implement at least some operations of the secondary base station 320, 420, 520 as described. The implementation of the operations of the secondary base station 320, 420, 520 may be achieved by arranging the processor 802 to execute at least some portion of computer program code 805a-805n stored in the memory 804 causing the processor 802, and thus the secondary base station 320, 420, 520, to implement one or more operations of the secondary base station 320, 420, 520. The processor 802 is thus arranged to access the memory 804 and retrieve and store any information therefrom and thereto. Moreover, the processor 802 is configured to control the communication through the communication interface 806 with any external unit, such as with the external mobile communication system 250, the base station 220, the at least one elevator related unit 225 of the elevator system, and/or any mobile terminal. The secondary base station 320, 420, 520 may be any base station, such as a repeater for example, suitable for receiving and transmitting 5G, pre-5G or similar signals.

Furthermore, according to one embodiment of the elevator system according to the invention, the at least one secondary base station 320, 420, 520 may comprise an internal power source to provide operating power for the secondary base station 320, 420, 520. The internal power source may be for example one of the following: battery, capacitive solution, regenerative solution. Alternatively, the operating power may be provided to the at least one secondary base station 320, 420, 520 from an electric system of the building 230 or from a machine room of the elevator system 200, for example from power supply cables of the elevator system 200.

The above described elevator system 200 according to the invention enables a full use of the mobile communication network. Furthermore, the above described elevator system according to the invention enables a high-speed functionality for at least one elevator related unit 225 of the elevator system. In addition, the above described elevator system 200 according to the invention enables other functionalities for different applications and users inside the elevator shaft 210, 410 and/or the building 230, such as access control, material management, building automation, lightning control, loT, self-diagnostics of components, etc..

The specific examples provided in the description given above should not be construed as limiting the applicability and/or the interpretation of the appended claims. Lists and groups of examples provided in the description given above are not exhaustive unless otherwise explicitly stated.

## Claims

1. An elevator system having a multichannel mobile communication functionality, wherein the elevator system comprises:
- an elevator shaft, and
- a mobile communication base station arranged the elevator shaft to a close vicinity of top of a building, the base station is at least configured to receive and transmit signals with an external mobile communication system and to receive and transmit the signals inside the elevator shaft,
wherein the signals comprise multiple channels and at least one of the multiple channels is configured to provide a first high-speed functionality for the at least one elevator related unit of the elevator system.

2. The elevator system according to claim 1, wherein the other channels of the multiple channels are configured to provide at least one of the following:
- a slow speed functionality for one or more non-time critical units or devices,
- a second high-speed functionality for non-elevator related local systems,
- a public communication functionality for public mobile terminals.

3. The elevator system according to any of the preceding claims, wherein the signals are 5G or pre-5G signals.

4. The elevator system according to any of the preceding claims, wherein the elevator related unit of the elevator system is a safety critical unit, which is at least one of the following: wireless safety circuit, elevator emergency telephone, wireless intercom system, surveillance camera.

5. The elevator system according to any of the preceding claims, wherein the base station comprises at least one of the following: a passive repeater antenna, an active repeater antenna.

6. The elevator system according to any of the preceding claims, wherein the elevator system further comprises at least one secondary base station arranged to one or more landings of the elevator shaft and configured to receive and transmit the signals further inside the building.

7. The elevator system according to claim 6, wherein the elevator system further comprises at least one other elevator shaft, which does not extend to the top of the building and at least one other secondary base station arranged to the at least one other elevator shaft or to at least one landing of the at least one other elevator shaft, wherein the at least one other secondary base station is configured to receive and transmit the signals inside the at least one other elevator shaft.

8. The elevator system according to any of claims 6 or 7, wherein the elevator system further comprises at least one automatic door and/or at least one escalator and at least one other secondary base station arranged to the at least one automatic door and/or to the at least one escalator, wherein the at least one other secondary base station is configured to receive and transmit the signals further inside the building.

9. The elevator system according to any of claims 6 to 8, wherein the at least one secondary base station comprises at least one of the following: a passive repeater antenna, an active repeater antenna.

10. The elevator system according to any of the preceding claims, wherein the external mobile communication system is at least one of the following: public network, telecommunication company system, cloud system.

11. A method for providing a multichannel mobile communication functionality for an elevator system, wherein the method comprises:
- receiving and transmitting signals with an external mobile communication system by means of a mobile communication base station arranged the elevator shaft to a close vicinity of top of a building, and
- receiving and transmitting the signals inside the elevator shaft by means of the base station,
wherein the signals comprise multiple channels and at least one of the multiple channels provides a first high-speed functionality for at least one elevator related unit of the elevator system.

12. The method according to claim 11, wherein the other channels of the multiple channels provide at least one of the following:
- a slow speed functionality for one or more non-time critical units or devices,
- a second high-speed functionality for non-elevator related local systems,
- a public communication functionality for public mobile terminals.

13. The method according to any of claims 11 or 12, wherein the signals are 5G or pre-5G signals.

14. The method according to any of claims 11-13, wherein the elevator related unit of the elevator system is a safety critical unit, which is at least one of the following: wireless safety circuit, elevator emergency telephone, wireless intercom system, surveillance camera.

15. The method according to any of claims 11-14, wherein the method further comprising receive and transmit the signals further inside the building by means of at least one secondary base station arranged to one or more landings of the elevator shaft.

16. The method according to claim 15, wherein the method further comprising receiving and transmitting signals inside at least one other elevator shaft which does not extend to the top of the building by means of at least one other secondary base station arranged to the at least one other elevator shaft or to at least one landing of the at least one other elevator shaft.

17. The method according to any of claims 15 or 16, wherein the method further comprising receiving and transmitting the signals further inside the building by means of the at least one other secondary base station arranged to the at least one automatic door and/or to the at least one escalator.
